# EUROPEAN PATENT APPLICATION

(11) **EP 4 607 333 A1**
(43) Date of publication of application: **27.08.2025**
(21) Application number: 25158816.6
(22) Date of filing: 19.02.2025
(51) Int. Cl.: G06F 3/12

(54) **COMPUTER PROGRAM FOR TERMINAL DEVICE, TERMINAL DEVICE, AND METHOD EXECUTED BY TERMINAL DEVICE**

(30) Priority: 20.02.2024 JP 2024023543
(71) Applicant: BROTHER KOGYO KABUSHIKI KAISHA, Aichi-ken 467-8561 (JP)
(72) Inventor: OGAWA, Kazuaki, Nagoya-shi, Aichi 467-8562 (JP)
(74) Representative: Kuhnen & Wacker Patent- und Rechtsanwaltsbüro PartG mbB

(57) **Abstract**

The terminal device (100) may detect that a predetermined setting of a communication device (10) has been completed. The terminal device (100) may, in a case where completion of the predetermined setting is detected, output first service information corresponding to a first service related to the communication device (10).

## Description

### BACKGROUND ART

US Patent Application Publication No. 2020-225885 describes a toner automatic delivery system including an MFP, an information management server, and a retailer server is known. When the MFP determines that a toner remaining level is smaller than a predetermined value and "toner is to be delivered" is not set as toner delivery information, the MFP displays a screen recommending to conclude a toner delivery contract.

### DESCRIPTION

The present teachings provide an art configured to improve user convenience.

The present teaching discloses a computer program for a terminal device. The computer program may cause a computer of the terminal device to function as: a detection unit configured to detect that a predetermined setting of a communication device has been completed; and an output control unit configured to, in a case where completion of the predetermined setting is detected, output first service information corresponding to a first service related to the communication device.

According to the above configuration, the terminal device sends the first output instruction to the communication device in the case where the completion of the predetermined setting of the communication device is detected. Due to this, the user can acknowledge the first service information. Accordingly, user convenience can be improved.

The computer program may further cause the computer to function as: an identification information reception unit configured to receive identification information for identifying the communication device from the communication device; a service information request sending unit configured to, in a case where the identification information is received from the communication device, send a service information request including the identification information to a server; and a service information reception unit configured to, in response to the service information request being sent to the server, receive the first service information from the server.

The output control unit may be configured to, in the case where the completion of the predetermined setting is detected, send to the communication device a first output instruction for causing the communication device to output the first service information.

The communication device may be configured to execute a print function, and the first output instruction may be for causing the communication device to print the first service information.

The computer program may further cause the computer to function as: a first display control unit configured to, in the case where the completion of the predetermined setting is detected, display the first service information on a display (114) of the terminal device. The output control unit may be configured to, after the first service information has been displayed on the display, output the first service information.

The output control unit may be configured to, in a case where the completion of the predetermined setting is detected and a user has not subscribed to the first service, output the first service information. In a case where the completion of the predetermined setting is detected and the user has subscribed to the first service, the first service information may be not outputted.

The computer program may further cause the computer to function as: a second display control unit configured to, in the case where the completion of the predetermined setting is detected, display a selection screen for selecting whether to output the first service information on a display of the terminal device. The output control unit may be configured to, in a case where it is selected on the selection screen that the first service information is to be outputted, output the first service information. In a case where it is selected on the selection screen that the first service information is not to be outputted, the first service information may be not outputted.

The output control unit may be configured to: in a case where the completion of the predetermined setting is detected and a user has not subscribed to the first service and the user has subscribed to a second service, output the first service information, the second service being different from the first service and related to the communication device, and in a case where the completion of the predetermined setting is detected and the user has not subscribed to the first service and the user has not subscribed to the second service, output the first service information and second service information, the second service information being different from the first service information and corresponding to the second service.

The output control unit may be configured to, in a case where the completion of the predetermined setting is detected and the user has subscribed to the first service but the user has not subscribed to the second service, output the second service information.

The communication device may be configured to execute a print function, and the first service may be related to printing.

A computer-readable recording medium storing the above-described computer program, a terminal device realized by the above-described computer program, and a method executed by the terminal device are novel and useful. Also, a communication system comprising a terminal device and a communication device is novel and useful.
FIG. 1 illustrates a configuration of a communication system.
FIG. 2 illustrates an example of respective tables.
FIG. 3 illustrates a sequence diagram of a preparation process.
FIG. 4 illustrates a flowchart of a first guidance process executed by a terminal device.
FIG. 5 illustrates a flowchart of a second guidance process executed by the terminal device.
FIG. 6 illustrates a flowchart of a second guidance process executed by a terminal device according to a second embodiment.

### (First Embodiment)

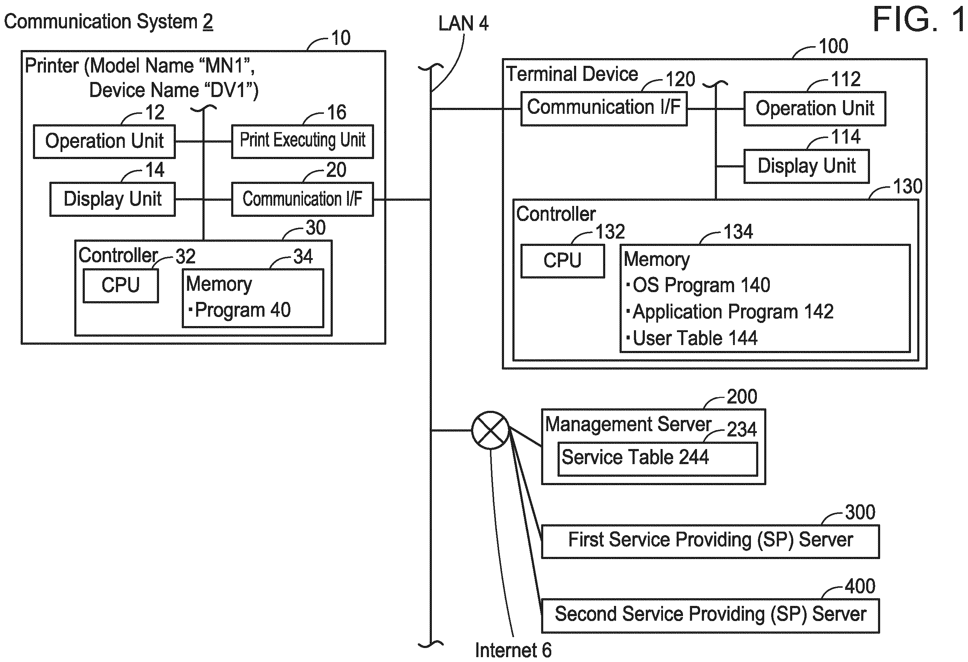

### (Configuration of Communication System 2; FIG. 1)

As shown in FIG. 1, a communication system 2 comprises a printer 10, a terminal device 100, a management server 200, a first service providing server 300, and a second service providing server 400. Hereafter, the service providing server will be referred to as "SP server". The printer 10 and the terminal device 100 are configured to communicate with each other via a LAN 4. The printer 10, the terminal device 100, the management server 200, the first SP server 300, and the second SP server 400 are connected to the Internet 6. The printer 10, the terminal device 100, the management server 200, the first SP server 300, and the second SP server 400 are configured to communicate with each other via the Internet 6.

### (Configuration of Printer 10)

The printer 10 is a peripheral device configured to execute a print function (i.e., peripheral device such as a PC). The printer 10 has a model name "MN1" and a device name "DV1". The model name is a name indicating a model of the printer. The device name is a name given by an administrator of the printer. The printer 10 comprises an operation unit 12, a display unit 14, a print executing unit 16, a communication interface 20, and a controller 30. Hereafter, the interface will be referred to as "I/F".

The operation unit 12 is an I/F that enables a user to input various information to the printer 10. The operation unit 12 comprises for example a touch panel for displaying software key(s) (operation object(s)), hardware key(s), or a combination thereof. The hardware key(s) include for example button(s) or switch(es). The display unit 14 is a display or a panel for displaying various information. The panel may be a touch panel or may not be a touch panel. Further, the panel is for example a liquid crystal panel, an organic EL panel.

The print executing unit 16 includes a print engine of an inkjet scheme, an electrophotographic scheme, or a thermal scheme. The print engine of inkjet scheme comprises a print head configured to spray ink droplets. The print engine of electrophotographic scheme comprises, for example, a photoreceptor and an exposure device configured to emit light and expose the photoreceptor with the light. The print engine of thermal scheme comprises a print head configured to generate heat with a heater.

The communication I/F 20 is connected to the LAN 4. The communication I/F 20 may be a wired I/F or may be a wireless I/F.

The controller 30 comprises a CPU 32 and a memory 34. The memory 34 comprises a primary storage and an auxiliary storage. Although this is an example, the primary storage includes a RAM and cache memory. Although this is an example, the auxiliary storage may be a ROM, a flash memory, a solid state drive (SSD), a hard disk drive (HDD), or a combination thereof. A program 40 is stored in the auxiliary storage of the memory 34. The CPU 32 realizes various types of processes in accordance with a program loaded from the auxiliary storage to the primary storage.

### (Configuration of Terminal Device 100)

The terminal device 100 is a terminal device such as a mobile phone (e.g., smartphone), a PDA, a tablet PC, etc. The terminal device 100 comprises an operation unit 112, a display unit 114, a communication I/F 120, and a controller 130.

The operation unit 112 is a user interface that enables a user to input various information to the terminal device 100. The operation unit 112 comprises for example a touch panel for displaying software key(s) (operation object(s)), hardware key(s), or a combination thereof. The hardware key(s) include for example button(s) and/or switch(es). The display unit 114 is a display or a panel for displaying various information. The panel may be a touch panel or may not be a touch panel. Further, the panel is for example a liquid crystal panel, an organic EL panel. The communication I/F 120 has a configuration the same as that of the communication I/F 20 of the printer 10.

The controller 130 comprises a CPU 132 and a memory 134. The memory 134 comprises a primary storage and an auxiliary storage. An OS program 140 and an application program 142 are stored in the auxiliary storage of the memory 134. OS is abbreviation for an operating system. Hereafter, the OS program 140 and the application program 142 will be respectively referred to as "OS 140" and "app 142". The OS 140 controls basic operations of the terminal device 100. The app 142 is a program for assisting initial setting of a printer. The initial setting of the printer 10 includes setting related to communication of the printer and setting related to the print function of the printer. Hereafter, the setting related to the communication of the printer and the setting related to the print function of the printer will be referred to as "communication setting" and "base setting", respectively. A user table 144 is further stored in the auxiliary storage of the memory 134.

### (Configuration of Management Server 200)

The management server 200 is disposed on the Internet 6 by a vendor of the printer 10 (hereafter referred to as "vendor" simply). In a modification, the management server 200 may be disposed on the Internet 6 by an entity different from the vendor. In another modification, the vendor may not prepare a hardware of the management server 200 by themselves, but may utilize an environment provided by an exterior cloud computing service. In this case, the vendor may realize the management server 200 by preparing a program (i.e., software) of the management server 200 and introducing the program into the above-mentioned environment.

The management server 200 is a server for managing guidance information corresponding to services provided by the first SP server 300 and the second SP server 400. The guidance information is information for guiding content(s) of the service(s). The guidance information includes, for example, a message indicating the content(s) of the service(s) and a QR Code for accessing a server which provides such service. "QR Code" is a registered trademark of DENSO WAVE INCORPORATED. A service table 244 is stored in the memory 234 of the management server 200.

### (Configuration of First SP server 300)

The first SP server 300 is disposed on the Internet 6 by a vendor. In a modification, the first SP server 300 may be established on the Internet 6 by an entity different from the vendor. In another modification, the vendor may not prepare a hardware of the first SP server 300 by themselves, but may utilize an environment provided by an exterior cloud computing service. In this case, the vendor may realize the first SP server 300 by preparing a program (i.e., software) of the first SP server 300 and introducing the same into the above-mentioned environment.

The first SP server 300 provides a remote print service related to the printer. The remote print service is a service which enables sending a print instruction to a printer via the first SP server 300 from outside when the user is away from home. The user can use the remote print service via the terminal device 100.

### (Configuration of Second SP Server 400)

The second SP server 400 is disposed on the Internet 6 by a vendor. In a modification, the second SP server 400 may be disposed on the Internet 6 by an entity different from the vendor. In another modification, the vendor may not prepare hardware of the second SP server 400 by themselves but may utilize an environment provided by an exterior cloud computing service. In this case, the vendor may realize the second SP server 400 by preparing a program (i.e., software) of the second SP server 400 and introducing the same into the above-mentioned environment.

The second SP server 400 provides a subscription service related to the printer. The subscription service is a service for which fee is charged. The subscription service charges a fixed fee if the number of sheets printed within a predetermined period (e.g., one month) is less than or equal to an upper limit number of printed sheets (e.g., 1000 sheets), and charges a price obtained by totaling the fixed fee and a fee according to the printed number of sheets exceeding the upper limit number of printed sheets if the number of printed sheets within the predetermined period exceeds the upper limit number of printed sheets. The subscription service also includes an automatic ordering service of automatically ordering a new cartridge in a case where a remaining amount of ink in a cartridge mounted in the printer becomes a predetermined remaining amount or less.

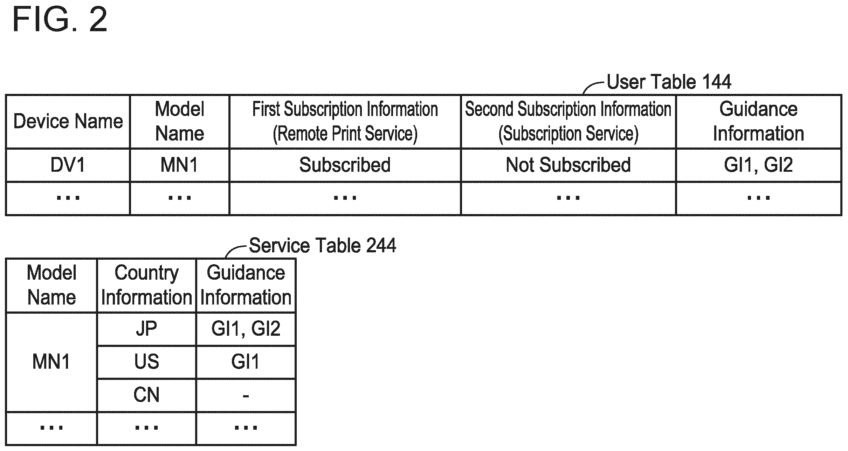

### (Configuration of Respective Tables; FIG. 2)

With reference to FIG. 2, contents of the user table 144 of the terminal device 100 and the service table 244 of the management server 200 will be described.

The user table 144 of the terminal device 100 is a table for managing information related to the user. The user table 144 stores a device name, a model name, first subscription information, second subscription information, and the guidance information in association with each other. The first subscription information indicates either "Subscribed" indicating that the user has already subscribed to the remote print service or "Not Subscribed" indicating that the user has not subscribed to the remote print service. The second subscription information indicates either "Subscribed" indicating that the user has already subscribed to the subscription service or "Not Subscribed" indicating that the user has not subscribed to the subscription service. The guidance information in the user table 144 is received from the management server 200.

The service table 244 of the management server 200 is a table for managing the guidance information. The service table 244 stores a model name, country information, and the guidance information in association with each other. In the present embodiment, when a printer having the model name "MN1" is used in Japan, the remote print service and the subscription service can be provided to the user. When the same printer is used in U.S.A., only the remote print service can be provided to the user. When the same printer is used in China, the remote print service and the subscription service cannot be provided to the user. As such, even when the model names of the printers are the same, if the countries in which the printers are used are different, the service(s) that can be provided to the user may differ. For this reason, in the service table 244, the guidance information is stored in association with the model name and the country information. In a modification, the service table 244 may store information indicating a wider range than the country information, and/or information indicating a smaller range (i.e., name of a city) than the country information, instead of the country information.

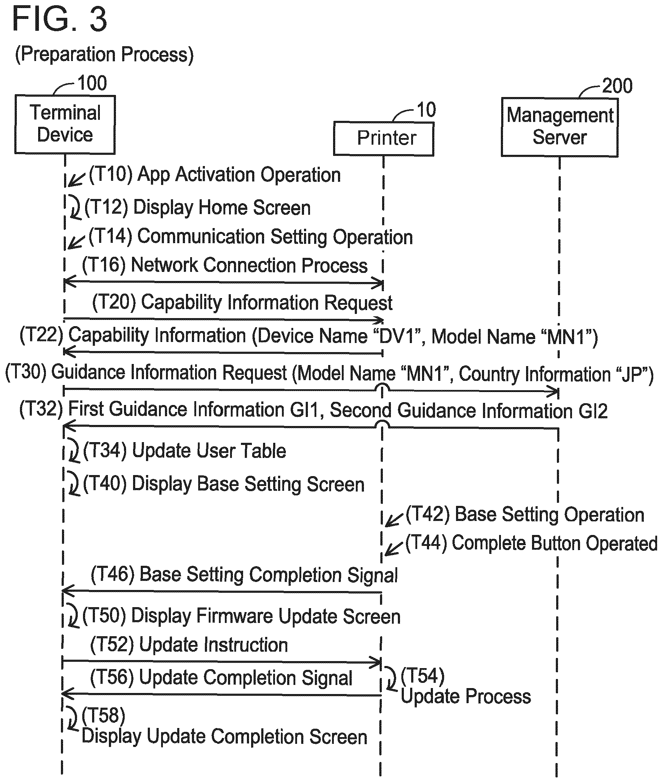

### (Preparation Process; FIG. 3)

With reference to FIG. 3, a preparation process will be described. The preparation process is an initial process executed after the printer 10 is purchased. In the preparation process, the communication setting and the base setting related to the printer 10 are performed. Hereafter, all communications executed between the printer 10 and the terminal device 100, and another device (e.g., management server 200) are executed via the communication I/F 20, 120. Accordingly, hereafter, a recitation "via the communication I/F 20 (or 120)" will be omitted. Also, for facilitating understanding, in FIG. 3, processes executed by a CPU (e.g., CPU 32) of each device (e.g., the printer 10) will be described without describing each CPU as a subject of action, but with each device (e.g., printer 10) as a subject of action.

In T10, a user of the terminal device 100 performs an app activating operation for activating the app 142 on the terminal device 100. Due to this, in T12, the app 142 displays a home screen on the display unit 114. The home screen includes for example a communication setting button for causing the terminal device to perform communication setting of the printer 10. In T14, the user performs an operation of selecting the communication setting button. Due to this, in T16 a network connection process is executed between the terminal device 100 and the printer 10. Although this is an example, the network connection process is a process of establishing a wireless connection between the printer 10 and an access point to which the terminal device 100 is connected. When the network connection process is completed, the printer 10 is connected to the LAN 4 and the Internet 6. The terminal device 100 determines that the communication setting has been completed in response to receiving a signal indicating that the communication setting has been completed from the printer 10.

In T20, the terminal device 100 sends a capability information request to the printer 10. The capability information request is a signal for requesting the printer 10 to send a device name and a model name. In T22, the terminal device 100 receives capability information including the device name "DV1" and the model name "MN1" from the printer 10.

In T30, the terminal device 100 sends a guidance information request including the model name "MN1" and the country information "JP" to the printer 10. The guidance information request is a signal for requesting the management server 200 to send the guidance information.
When in T30 the management server 200 receives the guidance information request from the terminal device 100, the management server 200 specifies the model name "MN1" and the country information "JP" in that information, and specifies, from the service table 244, first guidance information GI1 and second guidance information GI2 that are associated with the model name "MN1" and the country information "JP". In T32, the management server 200 sends the first guidance information GI1 and the second guidance information GI2 to the terminal device 100.

When in T32 the terminal device 100 receives the first guidance information GI1 and the second guidance information GI2 from the management server 200, in T34 the terminal device 100 updates the user table 144. Specifically, the terminal device 100 stores the device name "DV1", the model name "MN1", the first subscription information "Not Subscribed", the second subscription information "Not Subscribed", the first guidance information GI1, and the second guidance information GI2 in association with each other in the user table 144. As mentioned above, the terminal device 100 receives the guidance information from the management server 200 in response to sending the model name "MN1" received from the printer 10 to the management server 200. Due to this, the user does not have to for example input the model name "MN1" of the printer 10. Accordingly, user convenience can be improved.

In T40, the terminal device 100 displays a base setting screen. The base setting screen is a screen related to the base setting. Although this is an example, the base setting screen includes images corresponding to an operation of attaching a cartridge to the print executing unit 16 of the printer 10 and an operation of setting a print medium in a housing part (not illustrated) of the printer 10.

In T42, the user performs the base setting in accordance with the base setting screen. When the base setting is completed, in T44 the user operates a "Complete" button displayed on the display unit 14 of the printer 10. Due to this, in T46, the printer 10 sends a base setting completion signal indicating that the base setting has been completed to the terminal device 100.

In T46, the terminal device 100 receives the base setting completion signal from the printer 10. Due to this, the terminal device 100 detects that the base setting has been completed. Subsequently, in T50, the terminal device 100 displays a firmware update screen. The firmware update screen includes a message indicating that a process of updating a firmware installed in the printer 10 to a latest version of firmware is currently ongoing. The firmware is a program for realizing specific operations of the printer 10 (e.g., operation of the print executing unit). The firmware is stored in the auxiliary storage of the memory 34 of the printer 10. In T52, the terminal device 100 sends an update instruction for instructing the printer 10 to update the firmware to the printer 10.

When in T52 the printer 10 receives the update instruction from the terminal device 100, in T54 the printer 10 executes an update process of updating the firmware. Although this is an example, the update process includes for example a process of sending a firmware request which requests sending of the latest version of firmware to a firmware management server (not illustrated), a process of receiving the latest version of firmware from the firmware management server, and a process of installing the latest version of firmware on the printer 10. When the printer 10 has completed installing the latest version of firmware, in T56 the printer 10 sends an update completion signal indicating that installation of the latest version of firmware has been completed to the terminal device 100.

When in T56 the terminal device 100 has received the update completion signal from the printer 10, the terminal device 100 displays an update completion screen, instead of the firmware update screen. The update completion screen includes a message indicating that the update of the firmware of the printer 10 has been completed. Due to this, the preparation process is completed. That is, the communication setting and the base setting for the printer 10 are completed.

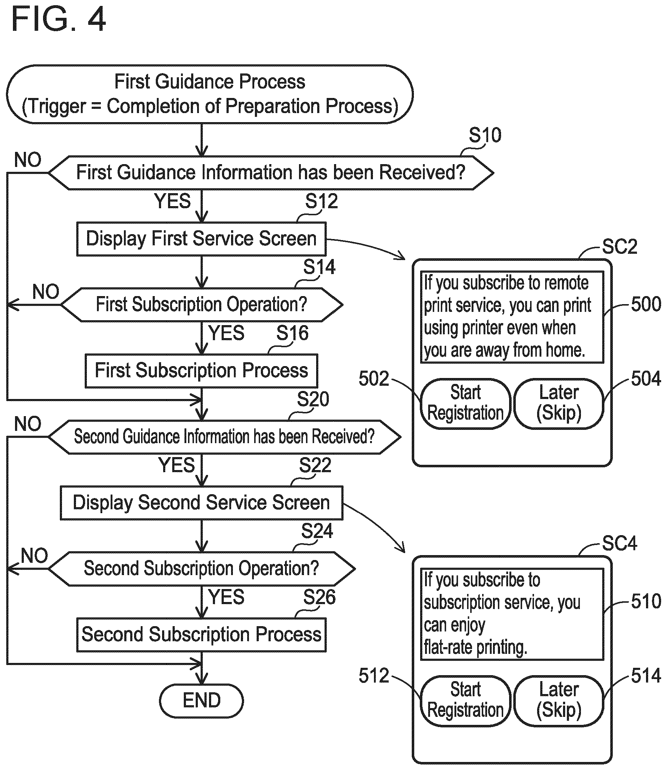

### (First Guidance Process; FIG. 4)

With reference to FIG. 4, a first guidance process executed by the app 142 of the terminal device 100 will be described. When the preparation process of FIG. 3 is completed, the app 142 executes the processes of FIG. 4. Here, the app 142 executes respective processes by accessing each hardware such as the display unit 114, the memory 134, and the communication I/F 120 via the OS 140. Hereafter, recitation of the execution of the app 142 executing each process via the OS 140 may be omitted from the description.

In S10, the app 142 determines whether the first guidance information GI1 has been received or not in the preparation process (see FIG. 3). When the first guidance information GI1 has been received (YES to S10), the app 142 proceeds to S12. Contrary to this, when the first guidance information GI1 has not been received (NO to S10), the app 142 proceeds to S20.

In S12, the app 142 displays a first service screen SC2 on the display unit 114 by using the received first guidance information GI1. The first service screen SC2 includes a remote print message 500 included in the first guidance information GI1, a Start Registration button 502, and a Later (Skip) button 504. The remote print message 500 indicates a content of the remote print service. Although this is an example, the remote print message 500 is "If you subscribe to remote print service, you can print using printer even when you are away from home."

In S14, the app 142 determines whether the app 142 has received a first subscription operation or not. Specifically, the app 142 determines whether the app 142 has received an operation of selecting the Start Registration button 502 on the first service screen SC2 or not. In a case where the app 142 receives the operation of selecting the "Start Registration" button 502 (YES to S14), the app 142 proceeds to S16. Contrary to this, in a case where the app 142 does not receive the operation of selecting the Start Registration button 502 (NO to S14), the app 142 proceeds to S20. Here, the case where the operation of selecting the Start Registration button 502 is not received is when an operation of selecting the Later (Skip) button 504 on the first service screen SC2 has been received.

In S16, the app 142 executes a first subscription process. The first subscription process is for the user to subscribe to the remote print service. The first subscription process is executed between the printer 10, the terminal device 100, and the first SP server 300. The first subscription process includes, for example a first establishing process, a first device registration process, and a first table update process. The first establishing process is a process of establishing a fulltime connection between the printer 10 and the first SP server 300. The fulltime connection is for example an Extensible Messaging and Presence Protocol (XMPP) connection. The first device registration process is a process of registering the device name "DV1" of the printer 10 in the first SP server 300. In response to the device name "DV1" being sent from the printer 10 to the first SP server 300, the device name "DV1" is registered in the first SP server 300. The first table update process is a process of updating the first subscription information stored in association with the device name "DV1" in the user table 144 from "OFF" to "ON". When the first subscription process is completed, the app 142 proceeds to S20.

In S20, the app 142 determines whether the second guidance information GI2 has been received or not in the preparation process (see FIG. 3). When the second guidance information GI2 has been received (YES to S20), the app 142 proceeds to S22. Contrary to this, when the second guidance information GI2 has not been received (NO to S20), the app 142 ends the processes of FIG. 4.

In S22, the app 142 displays a second service screen SC4 on the display unit 114 by using the received second guidance information GI2. The second service screen SC4 includes a subscription message 510 included in the second guidance information GI2, a Start Registration button 512, and a Later (Skip) button 514. The subscription message 510 indicates a content of the subscription service. Although this is an example, the subscription message 510 is "If you subscribe to subscription service, you can enjoy flat-rate printing."

In S24, the app 142 determines whether the app 142 has received a second subscription operation or not. Specifically, the app 142 determines whether the app 142 has received an operation of selecting the Start Registration button 512 on the second service screen SC4 or not. In a case where the app 142 receives the operation of selecting the Start Registration button 512 (YES to S24), the app 142 proceeds to S26. Contrary to this, in a case where the app 142 does not receive the operation of selecting the Start Registration button 512 (NO to S24), the app 142 ends the processes of FIG. 4. Here, the case where the operation of selecting the Start Registration button 512 is not received is when an operation of selecting the Later (Skip) button 514 on the second service screen SC4 has been received.

In S26, the app 142 executes a second subscription process. The second subscription process is a process for the user to subscribe to the subscription service. The second subscription process is executed between the printer 10, the terminal device 100, and the second SP server 400. The second subscription process includes, for example, a second establishing process, a second device registration process, a payment information registration process, and a second table update process. The second establishing process is a process of establishing a fulltime connection between the printer 10 and the second SP server 400. The second device registration process is a process of registering the device name "DV1" of the printer 10 in the second SP server 400. In response to the device name "DV1" being sent from the printer 10 to the second SP server 400, the device name "DV1" is registered in the second SP server 400. The payment information registration process is a process of registering information for paying a print fee. The second table update process is a process of updating the second subscription information stored in association with the device name "DV1" in the user table 144 from "OFF" to "ON". When S26 ends, the app 142 ends the processes of FIG. 4.

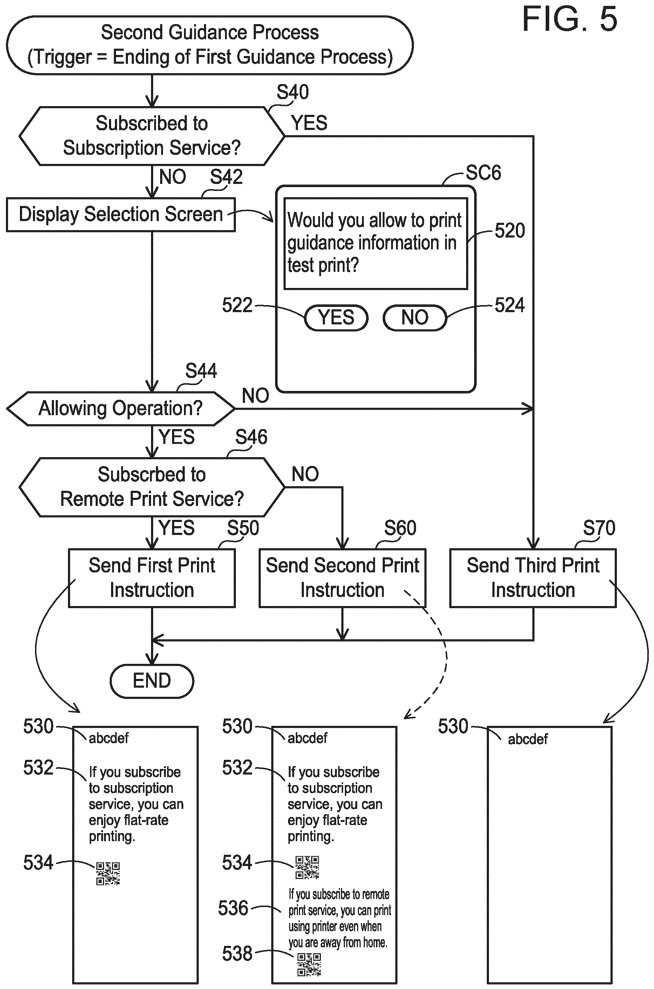

### (Second Guidance Process; FIG. 5)

With reference to FIG. 5, a second guidance process executed by the app 142 of the terminal device 100 will be described. In a case where the first guidance process (see FIG. 4) is completed, the app 142 executes processes of FIG. 5.

In S40, the app 142 determines whether the user has already subscribed to the subscription service or not. The app 142 specifies the second subscription information stored in association with the device name "DV1" of the printer 10 from the user table 144. In a case where the second subscription information is "ON" (YES to S40), the app 142 proceeds to S70. Contrary to this, in a case where the second subscription information is not "ON" (NO to S40), the app 142 proceeds to S42.

In S42, the app 142 displays a selection screen SC6 on the display unit 114. The selection screen SC6 includes a confirmation message 520, a YES button 522, and a NO button 524. The confirmation message 520 is a message for confirming whether to allow the guidance information to be printed in a test print. The test print is a process of confirming whether printing is properly executed. As such, the user can select whether to cause the printer 10 to print the guidance information in the test print or not. Accordingly, user convenience can be improved.

In S44, the app 142 determines whether the app 142 has received an allowing operation of selecting the YES button 522 on the selection screen SC6 or not. In a case where the app 142 receives the allowing operation (YES to S44), the app 142 proceeds to S46. Contrary to this, in a case where the app 142 does not receive the allowing operation (NO to S44), the app 142 proceeds to S60.

In S46, the app 142 determines whether the user of the printer 10 has already subscribed to the remote print service or not. The app 142 specifies the first subscription information stored in association with the device name "DV1" of the printer 10 from the user table 144. In a case where the first subscription information is "ON" (YES to S46), the app 142 proceeds to S50. Contrary to this, in a case where the first subscription information is not "ON" (NO to S46), the app 142 proceeds to S60.

In S50, the app 142 generates first print data by using the second guidance information GI2. The first print data includes a character string 530 for the test print, a subscription message 532 included in the second guidance information GI2, and a subscription QR Code 534 included in the second guidance information GI2. The character string 530 is information for the test print, and is "abcdef". The character string 530 is pre-stored in the memory 134. Next, the app 142 sends a first print instruction including the first print data to the printer 10. When S50 ends, the app 142 ends the processes of FIG. 5.

When the printer 10 receives the first print instruction from the terminal device 100, the printer 10 executes printing using the first print data included in the first print instruction. That is, the printer 10 executes the test print using the first print data. Due to this, a print image including the character string 530 corresponding to the character string "abcdef", the subscription message 532, and the subscription QR Code 534. The subscription QR Code 534 is information for accessing the second SP server 400 which provides the subscription service. According to such configuration, because the second guidance information GI2 is printed on a print medium, a possibility of the user confirming the content of the second guidance information GI2 can be increased.

In S60, the app 142 generates second print data by using the first guidance information GI1 and the second guidance information GI2. The second print data includes the character string 530, the subscription message 532, the subscription QR Code 534, a remote print message 536 included in the first guidance information GI1, and a remote print QR Code 538 included in the first guidance information GI1. Next, the app 142 sends a second print instruction including the second print data to the printer 10. When S60 ends, the app 142 ends the processes of FIG. 5.

When the printer 10 receives the second print instruction from the terminal device 100, the printer 10 executes printing using the second print data included in the second print instruction. That is, the printer 10 executes the test print using the second print data. Due to this, a print image including the character string 530, the subscription message 532, the subscription QR Code 534, the remote print message 536, and the remote print QR Code 538 is printed. The remote print QR Code 538 is information for accessing the first SP server 300 which provides the remote print service.

As mentioned above, the first print data in the case where the user has already subscribed to the remote print service does not include information corresponding to the first guidance information GI1. In a case where the user has already subscribed to the remote print service, information related to the remote print service is not beneficial for the user. Accordingly, printing of unnecessary information can be suppressed, as a result of which user convenience can be improved.

Further, in the case where YES to S40 or NO to S44 is determined, in S70 the app 142 generates third print data including only the character string 530. Next, the app 142 sends a third print instruction including the third print data to the printer 10. When S70 ends, the app 142 ends the processes of FIG. 5.

When the printer 10 receives the third print instruction from the terminal device 100, the printer 10 executes printing using the third print data included in the third print instruction. That is, the printer 10 executes the test print using the third print data. In this case, a print image which does not include the guidance information is printed. In the case where the user has already subscribed to the subscription service, information related to the subscription service is not beneficial for the user. Accordingly, printing of unnecessary information can be suppressed, as a result of which user convenience can be improved.

### (Effects of Present Embodiment)

As mentioned above, in the case where the terminal device 100 detects that the communication setting of the printer 10 is completed, the terminal device 100 sends the first print instruction to the printer 10 (S50 in FIG. 5). Due to this, the user can acknowledge the second guidance information GI2. Accordingly, user convenience can be improved.

### (Correspondence Relationships)

The app 142 is an example for "computer-readable instructions for a terminal device". The printer 10 is an example for "communication device". The communication setting of the printer 10 is an example for "predetermined setting of the communication device". The subscription service is an example for "first service". The second guidance information GI2 is an example for "first service information". The device name "DV1" is an example for "identification information". The guidance information request in T30 of FIG. 3 is an example for "service information request". The first print instruction of S50 in FIG. 5 is an example for "first output instruction". The remote print service is an example of "second service". The first guidance information GI1 is an example for "second service information".

T16 of FIG. 3 is an example of a process executed by "detection unit". S50 of FIG. 5 is an example for a process executed by "output control unit".

### (Second Embodiment)

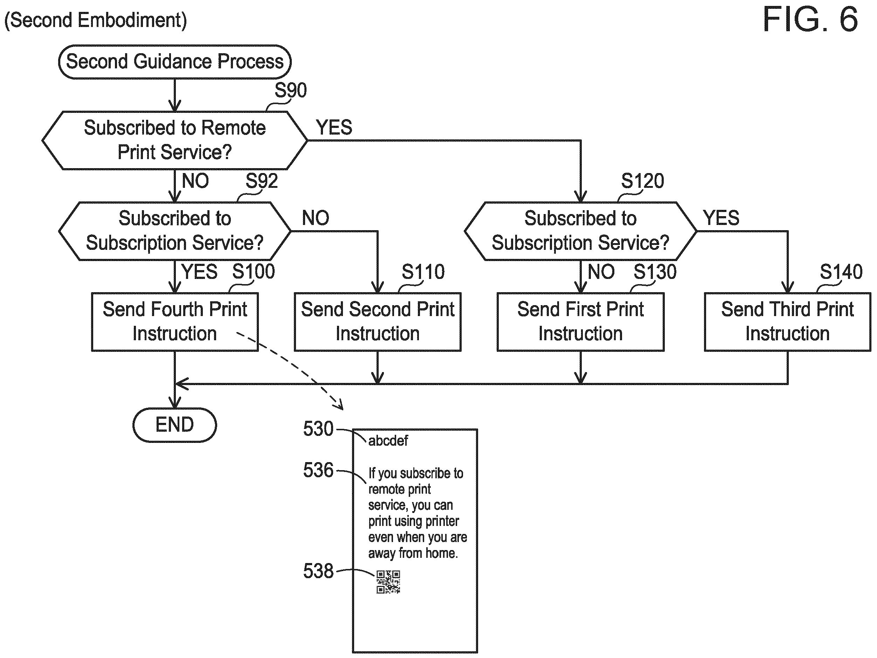

A communication system 2 of the second embodiment will be described. The app 142 of the terminal device 100 of the second embodiment executes a second guidance process of FIG. 6 instead of the second guidance process of FIG. 5.

### (Second Guidance Process; FIG. 6)

With reference to FIG. 6, a second guidance process executed by the app 142 of the terminal device 100 will be described. In the case where the first guidance process (see FIG. 4) is completed, the app 142 executes processes of FIG. 6.

S90 is the same as S46 of FIG. 5. In a case where YES is determined to S90, the app 142 proceeds to S120, whereas in a case where NO is determined to S90, the app 142 proceeds to S92.

S92 is the same as S40 of FIG. 5. In a case where YES is determined to S92, the app 142 proceeds to S100, whereas in a case where NO is determined to S92, the app 142 proceeds to S110.

In S110, the app 142 generates fourth print data by using the first guidance information GI1. The fourth print data includes the character string 530, the remote print message 536, and the remote print QR Code 538. Next, the app 142 sends a fourth print instruction including the fourth print data to the printer 10. When S100 ends, the app 142 ends the processes of FIG. 6.

When the printer 10 receives the fourth print instruction from the terminal device 100, the printer 10 executes printing by using the fourth print data included in the fourth print instruction. That is, the printer 10 executes a test print using the fourth print data. Due to this, a print image including the character string 530, the remote print message 536, and the remote print QR Code 538 is printed. In a case where the user has already subscribed to the subscription service, information related to the subscription service is not beneficial for the user. Accordingly, printing of unnecessary information can be suppressed, as a result of which user convenience can be improved.

S110 is the same as S60 of FIG. 5. S120 is the same as S92. In a case where the app 142 determines YES to S120, the app 142 proceeds to S130, whereas in a case where the app 142 determines NO to S120, the app 142 proceeds to S140. S130, S140 are the same as S50, S70 of FIG. 5, respectively.

(First Modification) The "communication device" may not be limited to a printer, but may be a multi-function machine which have a scan function in addition to the print function or a copier, for example.

(Second Modification) The base setting of the printer 10 may be an example for "predetermined setting". In another modification, the communication setting and the base setting of the printer 10 may be an example for the "predetermined setting".

(Third Modification) In the above embodiments, after the communication setting has been executed on the printer 10, the base setting is executed on the printer 10. In a modification, after the base setting has been executed on the printer 10, the communication setting may be executed on the printer 10. In the present modification, the base setting is an example for "predetermined setting". In another modification, the user may select the order of the communication setting on the printer 10 and the base setting on the printer 10. In the present modification, one of the communication setting and the base setting that is executed earlier by the user is an example for the "predetermined setting".

(Fourth Modification) The first guidance information GI1 and the second guidance information GI2 may be prestored in the memory 134 of the terminal device 100. In the present modification, T30, T32 of FIG. 3 may be omitted. In the present modification, "service information request sending unit", "service information reception unit" may be omitted.

(Fifth Modification) The second guidance processes of FIGS. 5 and 6 may be omitted. In the present modification, S22 of FIG. 4 is an example of a process executed by "output control unit". In another modification, in S50 of FIG. 5 for example, the terminal device 100 may notify the content of the second guidance information GI2, for example, by using a loudspeaker. In the present modification, the process executed by the loudspeaker is an example for a process executed by "output control unit".

(Sixth Modification) In S50, S60 of FIG. 5, S100, S110, S130 of FIG. 6, the terminal device 100 may send an instruction for displaying the content of the guidance information on the display unit 14 of the printer 10 to the printer 10.

(Seventh Modification) FIG. 4 may be omitted. In the present modification, in the case where the preparation process of FIG. 3 is completed, the app 142 executes the second guidance process of FIG. 5 or FIG. 6. In the present modification, "first display control unit" may be omitted.

(Eighth Modification) In the first embodiment, S40 of FIG. 5 may be omitted. In the second embodiment, S92, S120 of FIG. 6 may be omitted. In these present modifications, the app 142 sends a print instruction corresponding to the second guidance information GI2 to the printer 10 irrespective of whether or not the user has already subscribed to the subscription service.

(Ninth Modification) In the first embodiment, S42, S44 of FIG. 5 may be omitted. In the present modification, "second display control unit" may be omitted.

(Tenth Modification) In the second embodiment, the app 142 may execute processes the same as S42, S44 of FIG. 5 before S90.

(Eleventh Modification) In the first embodiment, S46 of FIG. 5 may be omitted. S50 or S60 of FIG. 5 may be omitted. In another modification, in the second embodiment, the app 142 may send a print instruction of the same content to the printer 10 in S110 and S130 of FIG. 6. In these modifications, in the case where the user has not subscribed to the subscription service, the app 142 does not switch the content of the print instruction to be sent to the printer 10 depending on whether the user has already subscribed to the remote print service or not.

(Twelfth Modification) In the second embodiment, in S100 and S140 of FIG. 6, the app 142 may send a print instruction of the same content to the printer 10. In the present modification, in the case where the user has already subscribed to the subscription service, the app 142 does not switch the content of the print instruction to be sent to the printer 10 depending on whether the user has already subscribed to the remote print service or not.

(Thirteenth Modification) The remote print service and the subscription service are respectively an example for "first service" and "second service". A service of shipping a consumable article for a printer may be an example for "first service".

(Fourteenth Modification) The first print data, the second print data, or the fourth print data corresponding to the guidance information may not include the character string 530.

(Fifteenth Modification) Although in each of the above embodiments, the processes of FIGS. 3 to 6 are realized by software (e.g., the program 40, 140, 142), at least one of these processes may be realized by hardware such as logic circuitry.

## Claims

1. A computer program (142) for a terminal device (100),
wherein the computer program (142) causes a computer (132) of the terminal device (100) to function as:
a detection unit configured to detect that a predetermined setting of a communication device (10) has been completed; and
an output control unit configured to, in a case where completion of the predetermined setting is detected, output first service information corresponding to a first service related to the communication device (10).

2. The computer program (142) as in claim 1, wherein the computer program (142) further causes the computer (132) to function as:
an identification information reception unit configured to receive identification information for identifying the communication device (10) from the communication device (10);
a service information request sending unit configured to, in a case where the identification information is received from the communication device (10), send a service information request including the identification information to a server (200); and
a service information reception unit configured to, in response to the service information request being sent to the server (200), receive the first service information from the server (200).

3. The computer program (142) as in claim 1 or 2, wherein the output control unit is configured to, in the case where the completion of the predetermined setting is detected, send to the communication device (10) a first output instruction for causing the communication device (10) to output the first service information.

4. The computer program (142) as in claim 3, wherein the communication device (10) is configured to execute a print function, and
the first output instruction is for causing the communication device (10) to print the first service information.

5. The computer program (142) as in claim 4, wherein the computer program (142) further causes the computer (132) to function as:
a first display control unit configured to, in the case where the completion of the predetermined setting is detected, display the first service information on a display (114) of the terminal device (100),
wherein the output control unit is configured to, after the first service information has been displayed on the display, output the first service information.

6. The computer program (142) as in any one of claims 1 to 5, wherein the output control unit is configured to, in a case where the completion of the predetermined setting is detected and a user has not subscribed to the first service, output the first service information, and
in a case where the completion of the predetermined setting is detected and the user has subscribed to the first service, the first service information is not outputted.

7. The computer program (142) as in any one of claims 1 to 6, wherein the computer program (142) further causes the computer (132) to function as:
a second display control unit configured to, in the case where the completion of the predetermined setting is detected, display a selection screen for selecting whether to output the first service information on a display of the terminal device (100),
wherein the output control unit is configured to, in a case where it is selected on the selection screen that the first service information is to be outputted, output the first service information, and
in a case where it is selected on the selection screen that the first service information is not to be outputted, the first service information is not outputted.

8. The computer program (142) as in any one of claims 1 to 7, wherein the output control unit is configured to:
in a case where the completion of the predetermined setting is detected and a user has not subscribed to the first service and the user has subscribed to a second service, output the first service information, the second service being different from the first service and related to the communication device (10), and
in a case where the completion of the predetermined setting is detected and the user has not subscribed to the first service and the user has not subscribed to the second service, output the first service information and second service information, the second service information being different from the first service information and corresponding to the second service.

9. The computer program (142) as in claim 8, wherein the output control unit is configured to, in a case where the completion of the predetermined setting is detected and the user has subscribed to the first service but the user has not subscribed to the second service, output the second service information.

10. The computer program (142) as in any one of claims 1 to 9, wherein the communication device (10) is configured to execute a print function, and
the first service is related to printing.

11. A terminal device (100) comprising:
a detection unit configured to detect that a predetermined setting of a communication device (10) has been completed; and
an output control unit configured to, in a case where completion of the predetermined setting is detected, output first service information corresponding to a first service related to the communication device (10).

12. A method executed by a terminal device (100), the method comprising:
detecting that a predetermined setting of a communication device (10) has been completed; and
in a case where completion of the predetermined setting is detected, outputting first service information corresponding to a first service related to the communication device (10).
